(19) **Europäisches Patentamt / European Patent Office / Office européen des brevets**

(11) **EP 2 983 417 A1**

(12) **EUROPEAN PATENT APPLICATION**
published in accordance with Art. 153(4) EPC

(43) Date of publication:
**10.02.2016 Bulletin 2016/06**

(21) Application number: **14778666.9**

(22) Date of filing: **03.04.2014**

(51) Int Cl.:
**H04W 52/02** *(2009.01)*  **H04W 88/08** *(2009.01)*

(86) International application number:
**PCT/JP2014/059831**

(87) International publication number:
**WO 2014/163139 (09.10.2014 Gazette 2014/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.04.2013 JP 2013080001**

(71) Applicant: **Kyocera Corporation Kyoto-shi, Kyoto 612-8501 (JP)**

(72) Inventors:
- **MORITA, Kugo**
  **Kyoto-shi**
  **Kyoto 612-8501 (JP)**
- **ADACHI, Hiroyuki**
  **Kyoto-shi**
  **Kyoto 612-8501 (JP)**

(74) Representative: **Schwabe - Sandmair - Marx Patentanwälte**
**Stuntzstraße 16**
**81677 München (DE)**

(54) **BASE STATION, USER TERMINAL, AND COMMUNICATION CONTROL METHOD**

(57)     A base station according to a first aspect controls a cell. The base station comprises: a transmitter configured to transmit a radio signal; a controller configured to perform discontinuous transmission in which the transmitter is discontinuously activated; and a receiver configured to receive a request for communication from a user terminal in the cell. The controller temporarily changes an activation pattern of the transmitter in response to the reception of the request for communication when performing the discontinuous transmission, and notifies the user terminal of pattern information indicating a changed activation pattern.

FIG. 11

**Description**

## TECHNICAL FIELD

The present invention relates to a base station, a user terminal, and a communication control method used in a mobile communication system.

## BACKGROUND ART

In a 3rd Generation Partnership Project (3GPP), which is a standardization project of a mobile communication system, it has been studied to introduce a new carrier structure (New Carrier Type (NCT)) from Release 12.
As one of the NCT, it has been proposed to reduce cell-specific reference signals (CRS) compared to the past carrier structure (Legacy Carrier Type (LCT)) (see Non Patent Literature 1, for example).

## PRIOR ART DOCUMENT

### Non-PATENT DOCUMENT

[Non Patent Literature 1] Written contribution on 3GPP: "R1-113289"

## SUMMARY OF THE INVENTION

When a base station transmits a CRS discontinuously, power consumption of the base station can be reduced (i.e., power saving) by stopping the operation of a transmitter of the base station during a period where no CRS is transmitted.
In such a method, however, there is a risk that a user terminal that exists in a cell of the base station is disabled to establish desired communication. Thus, it has been difficult to suppress deterioration in quality of service, while saving power of the base station.
The present invention, therefore, provides a base station, a user terminal, and a communication control method that are capable of suppressing deterioration in quality of service, while achieving power saving.
A base station according to a first aspect controls a cell. The base station comprises: a transmitter configured to transmit a radio signal; a controller configured to perform discontinuous transmission in which the transmitter is discontinuously activated; and a receiver configured to receive a request for communication from a user terminal in the cell. The controller temporarily changes an activation pattern of the transmitter in response to the reception of the request for communication when performing the discontinuous transmission, and notifies the user terminal of pattern information indicating a changed activation pattern.
A user terminal according to a second aspect exists in a cell of a base station comprising a transmitter configured to transmit a radio signal. The base station performs discontinuous transmission in which the transmitter is discontinuously activated. The user terminal comprises: a controller configured to transmit a request for communication to the base station so as to temporarily change an activation pattern of the transmitter; and a receiver configured to perform reception from the base station based on pattern information indicating a changed activation pattern when the pattern information is provided from the base station.
A communication control method according to a third aspect comprises: a step of performing, by a base station comprising a transmitter configured to transmit a radio signal, discontinuous transmission in which the transmitter is discontinuously activated; a step of receiving, by the base station, a request for communication from a user terminal in its own cell; a step of temporarily changing an activation pattern of the transmitter in response to reception of the request for communication; and a step of notifying, by the base station, the user terminal of pattern information indicating a changed activation pattern.
According to an embodiment of the present invention, a user terminal, and a communication control method capable of suppressing deterioration in quality of service, while achieving power saving can be provided.

## BRIEF DESCRIPTION OF THE DRAWINGS

[Fig. 1] Fig. 1 illustrates a structure of an LTE system according to an embodiment.
[Fig. 2] Fig. 2 is a block diagram of a UE according to the embodiment.
[Fig. 3] Fig. 3 is a block diagram of an eNB according to the embodiment.

[Fig. 4] Fig. 4 illustrates a protocol stack of a radio interface in the LTE system.

[Fig. 5] Fig. 5 illustrates a structure of a radio frame used in the LTE system.

[Fig. 6] Fig. 6 is an explanatory diagram of an NCT by comparing it with an LCT.

[Fig. 7] Fig. 7 illustrates an operation environment according to the embodiment.

[Fig. 8] Fig. 8 is an explanatory diagram of an operation overview according to the embodiment.

[Fig. 9] Fig. 9 is an explanatory diagram of an operation overview according to the embodiment.

[Fig. 10] Fig. 10 illustrates an example of a structure of a table according to the embodiment.

[Fig. 11] Fig. 11 illustrates operation sequence according to the embodiment.

[Fig. 12] Fig. 12 illustrates a structure of an RAR message according to a modification 1.

[Fig. 13] Fig. 13 is a flowchart illustrating an operation of the eNB according to a modification 2.

## DESCRIPTION OF THE EMBODIMENT

[Overview of Embodiment]

A base station according to an embodiment controls a cell. The base station comprises: a transmitter configured to transmit a radio signal; a controller configured to perform discontinuous transmission in which the transmitter is discontinuously activated; and a receiver configured to receive a request for communication from a user terminal in the cell. The controller temporarily changes an activation pattern of the transmitter in response to the reception of the request for communication when performing the discontinuous transmission, and notifies the user terminal of pattern information indicating a changed activation pattern.

In the embodiment, when the controller changes the activation pattern in response to the reception of the request for communication, the controller sets the changed activation pattern based on information regarding communication performed by the user terminal.

In the embodiment, the information regarding communication is information indicating QoS required for the communication, or information indicating a data amount of the communication.

In the embodiment, the controller notifies the user terminal of the pattern information by including the pattern information in an RRC message or a random access response.

In the embodiment, the controller activates the transmitter at a first cycle during the discontinuous transmission. The controller changes the activation pattern into an activation pattern having a second cycle which is shorter than the first cycle, in response to the reception of the request for communication.

In the embodiment, the pattern information includes at least one of information indicating the second cycle, information indicating an uptime during activation of the transmitter, and an offset value that specifies timing to start the transmitter.

In the embodiment, the controller cancels the discontinuous transmission based on a reception status of the request for communication from a plurality of user terminals in the cell when performing the discontinuous transmission, and starts normal transmission.

A user terminal according to an embodiment exists in a cell of a base station comprising a transmitter configured to transmit a radio signal. The base station performs discontinuous transmission in which the transmitter is discontinuously activated. The user terminal comprises: a controller configured to transmit a request for communication to the base station so as to temporarily change an activation pattern of the transmitter; and a receiver configured to perform reception from the base station based on pattern information indicating a changed activation pattern when the pattern information is provided from the base station.

In the embodiment, the pattern information is included in an RRC message from the base station or a random access response.

A communication control method according to an embodiment comprises: a step of performing, by a base station comprising a transmitter configured to transmit a radio signal, discontinuous transmission in which the transmitter is discontinuously activated; a step of receiving, by the base station, a request for communication from a user terminal in its own cell; a step of temporarily changing an activation pattern of the transmitter in response to reception of the request for communication; and a step of notifying, by the base station, the user terminal of pattern information indicating a changed activation pattern.

[First Embodiment]

Hereinafter, with reference to the accompanying drawings, an embodiment in a case where the present invention is applied to LTE (Long Term Evolution) which is standardized by 3GPP will be described.

(Configuration of LTE system)

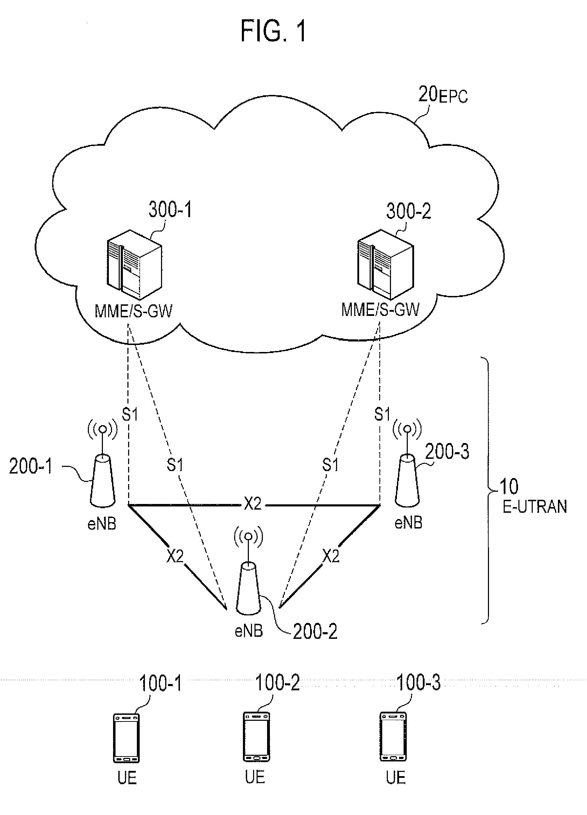

Fig. 1 is a configuration diagram of an LTE system according to a present embodiment. As shown in Fig. 1, the LTE system includes a plurality of UEs (User Equipments) 100, E-UTRAN (Evolved Universal Terrestrial Radio Access Network) 10, and EPC (Evolved Packet Core) 20. The E-UTRAN 10 corresponds to a radio access network and the EPC 20 corresponds to a core network. The E-UTRAN 10 and the EPC 20 forms a network of the LTE system.

The UE 100 is a mobile communication device and performs radio communication with a cell (a serving cell) with which a connection is established. The UE 100 corresponds to a user terminal.

The E-UTRAN 10 includes a plurality of eNBs 200 (evolved Node-Bs). The eNB 200 corresponds to a base station. The eNB 200 manages one or a plurality of cells and performs radio communication with the UE 100 which establishes a connection with the cell of the eNB 200. It is noted that the "cell" is used as a term indicating a minimum unit of a radio communication area, and is also used as a term indicating a function of performing radio communication with the UE 100.

The eNB 200, for example, has a radio resource management (RRM) function, a function of routing user data, and a measurement control function for mobility control and scheduling.

The EPC 20 includes a plurality of MME (Mobility Management Entity)/S-GWs (Serving-Gateways) 300. The MME is a network node for performing various mobility controls and the like for the UE 100 and corresponds to a controller. The S-GW is a network node that performs control to transfer user data and corresponds to a mobile switching center.

The eNBs 200 are connected mutually via an X2 interface. Further, the eNB 200 is connected to the MME/S-GW 300 via an S1 interface.

Next, the configurations of the UE 100 and the eNB 200 will be described.

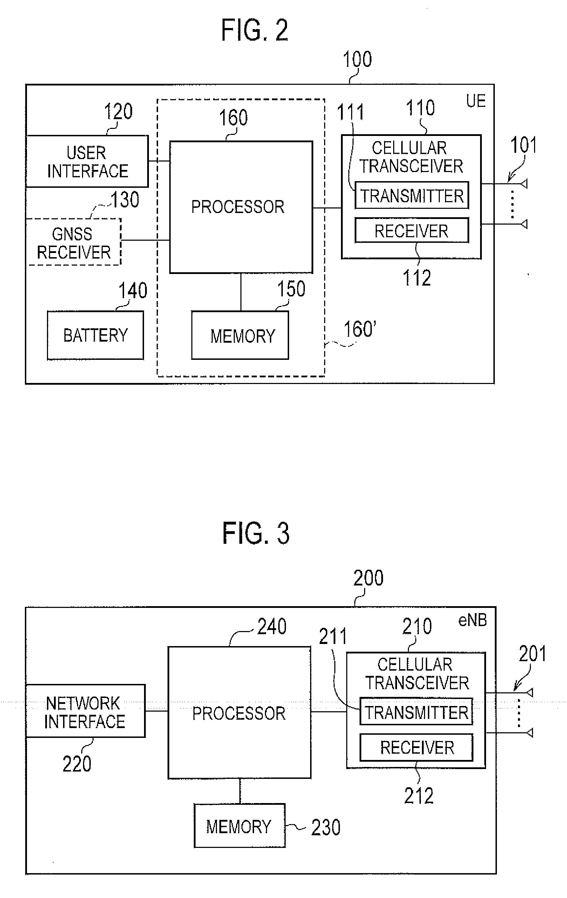

Fig. 2 is a block diagram of the UE 100. As shown in Fig. 2, the UE 100 includes a plurality of antennas 101, a radio transceiver 110, a user interface 120, a GNSS (Global Navigation Satellite System) receiver 130, a battery 140, a memory 150, and a processor 160. The memory 150 and the processor 160 constitute a terminal side controller. The UE 100 may not necessarily include the GNSS receiver 130. Further, the memory 150 may be integrally formed with the processor 160, and this set (that is, a chip set) may be called a processor 160' constituting the terminal side controller.

The plurality of antennas 101 and the radio transceiver 110 are used to transmit and receive a radio signal. The radio transceiver 110 includes a transmitter 111 that converts a baseband signal (a transmission signal) output from the processor 160 into a radio signal and transmits the radio signal from the plurality of antennas 101. Further, the radio transceiver 110 includes a receiver 112 that converts a radio signal received by the plurality of antennas 101 into a baseband signal (a reception signal), and outputs the baseband signal to the processor 160.

The user interface 120 is an interface with a user carrying the UE 100, and includes, for example, a display, a microphone, a speaker, various buttons and the like. The user interface 120 receives an operation from a user and outputs a signal indicating the content of the operation to the processor 160. The GNSS receiver 130 receives a GNSS signal in order to obtain location information indicating a geographical location of the UE 100, and outputs the received signal to the processor 160. The battery 140 accumulates a power to be supplied to each block of the UE 100.

The memory 150 stores a program to be executed by the processor 160 and information to be used for a process by the processor 160.

The processor 160 performs signal processing such as modulation and demodulation, encoding and decoding on the baseband signal. The processor 160 performs various controls by executing the program stored in the memory 150. The processor 160 executes various controls and various communication protocols described later. The processor 160 may further include a codec that performs encoding and decoding on sound and video signals.

Fig. 3 is a block diagram of the eNB 200. As shown in Fig. 3, the eNB 200 includes a plurality of antennas 201, a radio transceiver 210, a network interface 220, a memory 230, and a processor 240. The memory 230 and the processor 240 configure a base station side controller. Further, the memory 230 may be integrally formed with the processor 240, and this set (that is, a chip set) may be called a processor constituting the base station side controller.

The plurality of antennas 201 and the radio transceiver 210 are used to transmit and receive a radio signal. The radio transceiver 210 includes a transmitter 211 that converts a baseband signal (a transmission signal) output from the processor 240 into a radio signal and transmits the radio signal from the plurality of antennas 201. Further, the radio transceiver 210 includes a receiver 212 that converts a radio signal received by the plurality of antennas 201 into a baseband signal (a reception signal), and outputs the baseband signal to the processor 240.

The network interface 220 is connected to the neighboring eNB 200 via the X2 interface and is connected to the MME/S-GW 300 via the S1 interface. The network interface 220 is used in communication performed on the X2 interface and communication performed on the S1 interface.

The memory 230 stores a program to be executed by the processor 240 and information to be used for a process by the processor 240.

The processor 240 performs signal processing such as modulation and demodulation, encoding and decoding on the baseband signal. In addition, The processor 240 performs various controls by executing the program stored in the memory 230. Further, the processor 240 executes various controls and various communication protocols described later.

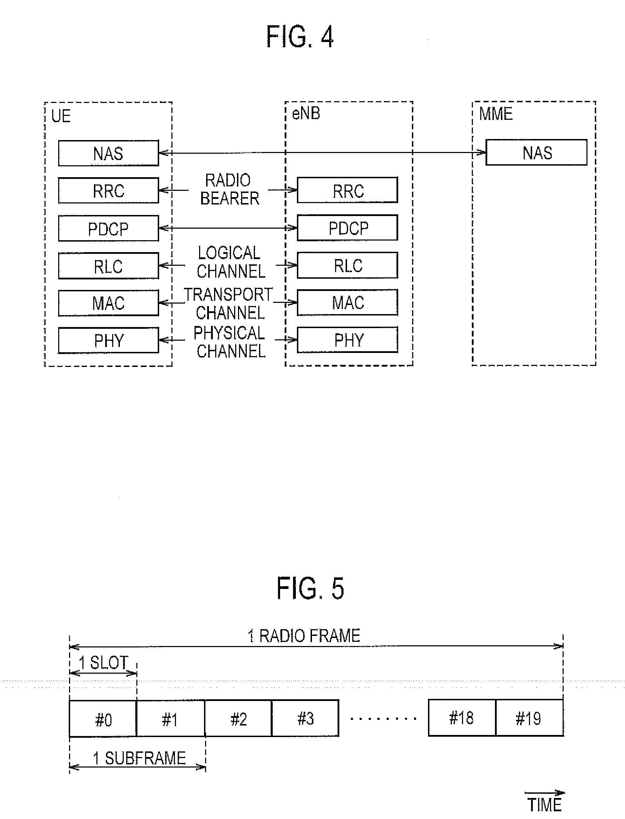

Fig. 4 is a protocol stack diagram of a radio interface in the LTE system. As shown in Fig. 4, the radio interface protocol is classified into a layer 1 to a layer 3 of an OSI reference model, wherein the layer 1 is a physical (PHY) layer. The layer 2 includes a MAC (Media Access Control) layer, an RLC (Radio Link Control) layer, and a PDCP (Packet Data Convergence Protocol) layer. The layer 3 includes an RRC (Radio Resource Control) layer.

The PHY layer performs encoding and decoding, modulation and demodulation, antenna mapping and demapping, and resource mapping and demapping. Between the PHY layer of the UE 100 and the PHY layer of the eNB 200, data is transmitted via the physical channel.

The MAC layer performs priority control of data, and a retransmission process and the like by hybrid ARQ (HARQ). Between the MAC layer of the UE 100 and the MAC layer of the eNB 200, data is transmitted via a transport channel. The MAC layer of the eNB 200 includes a transport format of an uplink and a downlink (a transport block size and a modulation and coding scheme (MCS)) and a scheduler for deciding a resource block to be assigned.

The RLC layer transmits data to an RLC layer of a reception side by using the functions of the MAC layer and the PHY layer. Between the RLC layer of the UE 100 and the RLC layer of the eNB 200, data is transmitted via a logical channel.

The PDCP layer performs header compression and decompression, and encryption and decryption.

The RRC layer is defined only in a control plane. Between the RRC layer of the UE 100 and the RRC layer of the eNB 200, a control message (a RRC message) for various types of setting is transmitted. The RRC layer controls the logical channel, the transport channel, and the physical channel in response to establishment, re-establishment, and release of a radio bearer. When there is an RRC connection between the RRC of the UE 100 and the RRC of the eNB 200, the UE 100 is in a connected state (a RRC connected state), and when there is no RRC connection, the UE 100 is in an idle state (a RRC idle state).

A NAS (Non-Access Stratum) layer positioned above the RRC layer performs session management, mobility management and the like.

Fig. 5 is a configuration diagram of a radio frame used in the LTE system. In the LTE system, OFDMA (Orthogonal Frequency Division Multiplexing Access) is applied to a downlink, and SC-FDMA (Single Carrier Frequency Division Multiple Access) is applied to an uplink, respectively.

As shown in Fig. 5, the radio frame consists of 10 subframes arranged in a time direction, wherein each subframe consists of two slots arranged in the time direction. Each subframe has a length of 1 ms and each slot has a length of 0.5 ms. Each subframe includes a plurality of resource blocks (RBs) in a frequency direction, and a plurality of symbols in the time direction. The resource block includes a plurality of subcarriers in the frequency direction. A radio resource unit composed by one subcarrier and one symbol is called a resource element (RE).

Among radio resources assigned to the UE 100, a frequency resource can be specified by a resource block and a time resource can be specified by a subframe (or slot).

(NCT)

An LTE system according to the embodiment supports a New Carrier Type (NCT) in the downlink. The NCT is scheduled to be launched from Release 12 in which a new carrier structure not restricted by previous Releases (that is, from Release 8 to Release 11) is adopted.

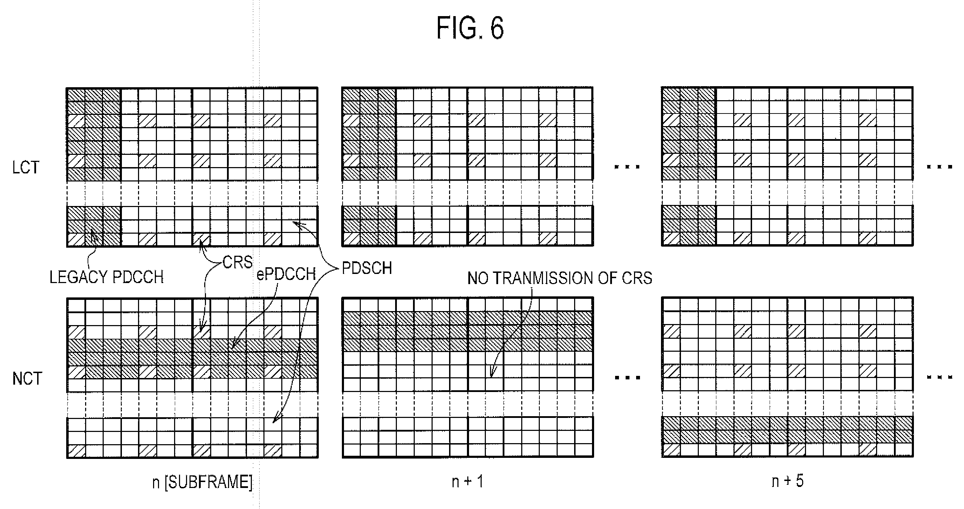

Fig. 6 is an explanatory view of the NCT by comparing it with the past example of a carrier structure (Legacy Carrier Type (LCT)).

In the LCT, as illustrated in Fig. 6, an interval of first several symbols in each subframe is a control area used as a physical downlink control channel (PDCCH) that is mainly used to transmit a control signal. The rest of the interval of each subframe is a data area used as a physical downlink shared channel (PDSCH) that is mainly used to transmit user data (data signals).

A control signal is transmitted through the PDCCH. The control signal may include, for example, uplink scheduling information (SI), downlink SI, and a TPC bit. The uplink SI is information indicating allocation of the uplink radio resource, and the downlink SI is information indicating allocation of the downlink radio resource. The TPC bit is information that instructs increase/decrease of transmission power in the uplink. Such information is referred to as downlink control information (DCI)

A control signal and/or a data signal are transmitted through the PDSCH. For example, the downlink data area may be allocated to the data signal alone, or otherwise be allocated such that the data signal and the control signal are multiplied.

In individual subframes, a cell-specific reference signal (CRS) and a channel state information-reference signal (CSI-RS) are provided in a distributed manner. The CRS and the CSI-RS are formed by predetermined orthogonal signal sequence. In the LCT, the CRS is provided in all subframes in a time axis direction. The CRS is a signal used to measure the channel state, received power (reference signal received power (RSRP)), etc. in a UE 100.

In contrast, the NCT is provided with an enhanced physical downlink control channel (ePDCCH), instead of the PDCCH, as a physical channel to transmit the control signal. The ePDCCH is a physical channel through which the control signal is transmitted in the data area (the PDSCH area). The ePDCCH is allocated to individual UEs 100 and is capable of transmitting the control signal for each UE 100. In the NCT, the CRS is provided only in some subframes in the time axis direction.

In carrier aggregation, the LCT may be used as a primary component carrier (PCC) and the NCT may be used as a secondary component carrier (SCC).

(Operation According to Embodiments)

(1) Operation Overview

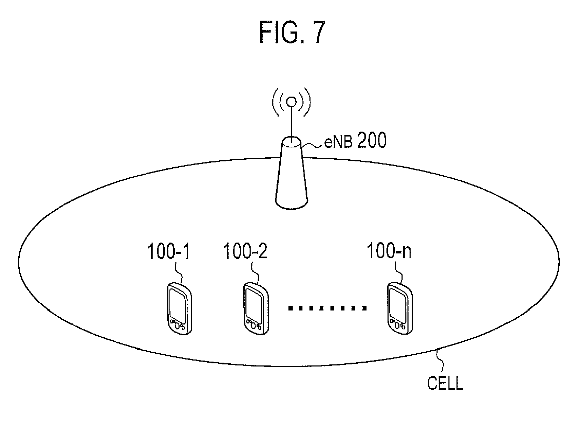

FIG. 7 illustrates an operation environment according to the embodiment. As illustrated in FIG. 7, a plurality of UEs 100 (UEs 100-1 to 100-n) is located in a cell controlled by an eNB 200. The NCT with the CRS removed therefrom is introduced into the cell controlled by the eNB200.

The eNB 200 comprises a transmitter 211 (see Fig. 3) configured to transmit a radio signal to the UE 100 in the cell. The radio signal transmitted by the transmitter 211 includes the control signal described above, a data signal, a reference signal (CRS, CSI-RS) and or the like. The transmitter 211, which includes a power amplifier, is a large power consuming portion of the eNB 200.

The eNB 200 also comprises a processor 240 (see Fig. 3) to set a transmission stopping interval during which the operation of the transmitter 211 is stopped. For example, the processor 240 stops power supply to the transmitter 211 (power amplifier) to stop the operation of the transmitter 211. By stopping the operation of the transmitter 211, the power consumption of the eNB 200 can be reduced (power saving). The processor 240 stops the operation of the transmitter 211 in the transmission stopping interval, but does not stop the operation of a receiver 212. Therefore, the radio signal can also be received continuously from the UE 100 during the transmission stopping interval.

The transmitter 211 transmits the CRS discontinuously. In the embodiment, the transmitter 211 transmits the CRS only in some subframes, instead of transmitting the CRS in all subframes. The processor 240 sets the transmission stopping interval during a period (subframe) where the transmitter 211 does not transmit the CRS. That is, the operation of the transmitter 211 is stopped in the subframe where the transmitter 211 does not transmit the CRS. By setting the transmission stopping interval during a period where the transmitter 211 does not transmit the CRS, the power saving of the eNB 200 can be achieved, while allowing measurement of a channel state, measurement of the RSRP, and or the like.

By activating the transmitter 211 discontinuously, the eNB 200 performs discontinuous transmission (DTX) in which the radio signal is discontinuously transmitted. In addition, the eNB 200 notifies the UEs 100-1 to 100-n of an activation pattern (which will be referred to as a DTX pattern hereinafter) of the transmitter 211 by broadcast transmission.

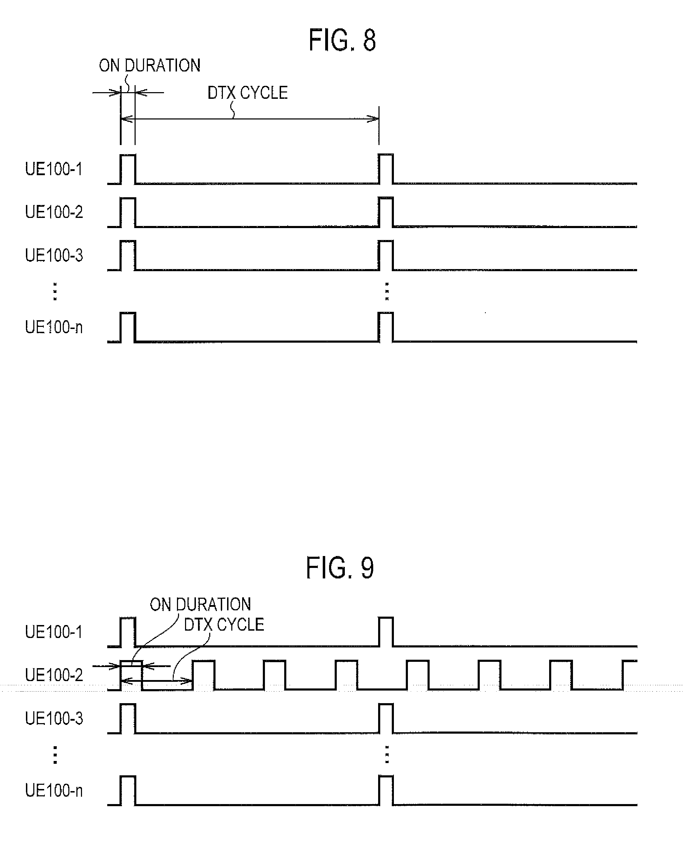

Figs. 8 and 9 are explanatory views for explaining the operation overview according to the embodiment. In Fig. 8, the UEs 100-1 to 100-n are in a state (idle state) where no communication is performing with the eNB 200.

As illustrated in Fig. 8, the UEs 100-1 to 100-n recognize the DTX pattern based on the broadcast information from the eNB 200. In the example of Fig. 8, it is recognized that the eNB 200 activate the transmitter 211 at a fixed activation cycle (dtx Cycle) and causes the transmitter 211 to enter the operation state for a fixed uptime (on Duration) for each dtx Cycle.

It is assumed herein that the need arises for the UE100-2 to perform communication such that a request for communication is transmitted from the UE 100-2 to the eNB 200. As illustrated in Fig. 9, the eNB 200, which is in the discontinuous transmission (DTX), temporarily changes the DTX pattern in response to the reception of the request for communication from the UE 100-2. In the example of Fig. 9, the eNB 200 shortens the activation cycle (dtx Cycle) and extends the uptime (on Duration).

The eNB 200 then notifies the UE 100-2 of the pattern information indicating a changed DTX pattern. In the embodiment, the eNB 200 includes the pattern information in the RRC message and notifies the UE 100-2. The eNB 200 does not notify any UE 100 other than the UE 100-2 of the pattern information.

Accordingly, the UE 100-2 comes to recognize the changed DTX pattern based on the pattern information and receives information from the eNB 200 according to the changed DTX pattern.

The UE 100-2 can thus establish desired communication, such that the power saving of the eNB 200 is achieved, while suppressing deterioration in quality of service.

(2) Method of Changing the DTX Pattern

In the embodiment, to change the DTX pattern in response to the reception of the request for communication from the UE 100, the eNB 200 sets the changed DTX pattern based on the information regarding the communication performed by the UE 100. "Information regarding the communication" herein refers to information indicating the quality of service (QoS) required for the communication, or the information indicating the data amount of the communication.

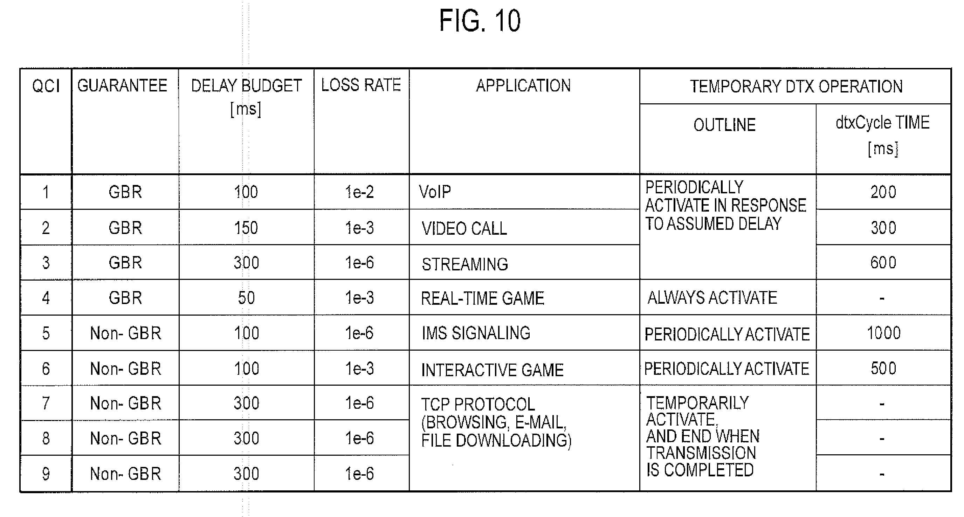

For example, the eNB 200 set the DTX pattern based on a QoS class identifier (QCI), which indicates the QoS of a bearer that has been established after the request for communication is generated. Fig. 10 illustrates an example of a structure of a table for setting the DTX pattern based on the QCI. The table is possessed by the eNB 200 in advance. As illustrated in Fig. 10, each QCI is associated with an appropriate DTX pattern (which is an activation cycle herein). For an application such as data download (FTP, web access, etc.), a necessary band is instantaneously allocated. For an application in which data is generated discontinuously (VoIP, streaming, etc.), the activation cycle is changed correspondingly to an appropriate interval.

Alternatively, the eNB 200 set the DTX pattern based on the data amount accumulated in a buffer of the eNB 200 after the request for communication is generated from the UE 100. Specifically, the eNB 200 decreases the activation cycle (dtx Cycle) and increases the uptime (on Duration) as the data amount accumulated in a buffer increases.

The eNB 200 then notifies the transmitting UE 100 of the pattern information indicating the changed DTX pattern. The pattern information includes at least one of the information indicating the activation cycle (dtx Cycle), the information indicating the uptime (on Duration) during the activation of the transmitter 211, and an offset value (dtx StartOffset) that specifies timing to start the transmitter 211.

The pattern information (DTX setting information), which is contained in the RRC message, may be formatted as follows:

$$[\text{Mathematical Formula 1}]$$
$$\text{DTX-Config} :: \text{CHOICE } \{$$
$$\qquad \text{relase,}$$
$$\qquad \text{setup} \quad \text{SEQUENCE } \{$$
$$\qquad\qquad \text{dtx-onDurationTimer },$$
$$\qquad\qquad \text{dtx-Cycle },$$
$$\qquad\qquad \text{dtx-StartOffset}$$
$$\qquad \}$$
$$\}$$

The UE 100 that has received the pattern information (DTX setting information) calculates the start timing according to the formula below:

$$[\text{Mathematical Formula 2}]$$
$$\text{if} \quad [\, (\, \text{SFN} \times 10\, ) \; + \; \text{subframe number}\, ] \text{ modulo dtx-Cycle } = \text{ dtx-StartOffset}$$
$$\text{start dtx-onDurationTimer}$$

(3) Operation Sequence

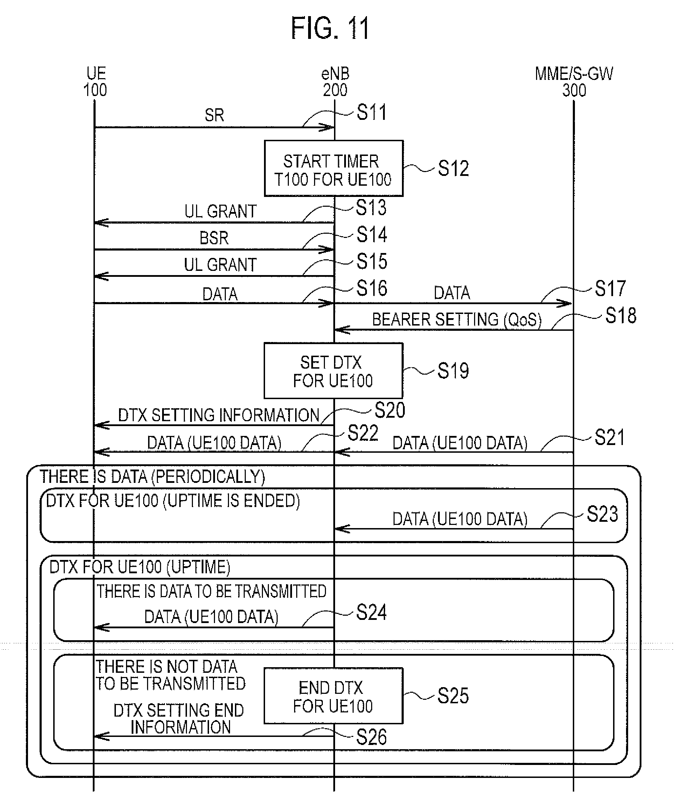

Fig. 11 illustrates operation sequence according to the embodiment. In an initial state of Fig. 11, the eNB 200 is in the discontinuous transmission (DTX) with the DTX pattern that is common to all UEs 100. An example of changing the DTX pattern based on the QoS will be described below.

As illustrated in Fig. 11, the UE 100 transmits a scheduling request (SR) to request allocation of the radio resource to the eNB 200 in step S11. The SR is equivalent to the request for communication.

In step S12, the eNB 200 starts a timer (T100) for the UE 100. The timer (T100) is set to prevent the start of a transmission stop state during processing subsequent to the reception of the SR. Specifically, it is expected that the process up to S20 is ended during the timer (T100) running.

In step S13, the eNB 200 transmits an UL Grant, which indicates the uplink allocated radio resource, to the UE 100.

In step S14, the UE 100 uses the uplink allocated radio resource to transmit a buffer status report (BSR), which indicates the accumulation amount of a buffer of the UE 100, to the eNB 200.

In step S15, the eNB 200 transmits the UL grant, which indicates the uplink allocated radio resource, to the UE 100 based on the buffer accumulation amount indicated by the BSR.

In step S16, the UE 100 uses the uplink allocated radio resource to transmit the uplink data to the eNB 200.

In step S17, the eNB 200 transfers data from the UE 100 to a core network (MME/S-GW 300).

In step S18, the core network (MME/S-GW 300) transmits the QCI, which indicates the QoS set in the bearer of the UE 100, to the eNB 200.

In step S19, the eNB 200 sets the DTX pattern corresponding to the QCI by referring to the table illustrated in Fig. 10. As a result, the DTX pattern is changed.

In step S20, the eNB 200 transmits the pattern information (DTX setting information) indicating the changed DTX pattern to the UE 100. The UE 100-2 recognizes the changed DTX pattern based on the pattern information.

In step S21, the core network (MME/S-GW300) transmits the data for the UE 100 to the eNB 200.

In step S22, the eNB 200 transfers the data from the core network (MME/S-GW300) to the UE 100. The eNB 200 performs transmission to the UE 100 within the uptime (on Duration) based on the DTX pattern. The UE 100 has recognized the changed DTX pattern, and performs reception from the eNB 200 according to the changed DTX pattern.

At timing other than the timing of the uptime (on Duration), the eNB 200 accumulates data from the core network (MME/S-GW 300) (step S23). If there is data to be transmitted to the UE 100 in the uptime (on Duration), the data is transmitted to the UE 100 (step S24).

In contrast, if no transmission data to the UE 100 is present in the uptime (on Duration), the temporary DTX pattern for the UE 100 is ended (step S25), and the end information indicating the ending of the DTX pattern is transmitted to the UE 100 (step S26). The end information may include information indicating the original DTX pattern (a common DTX pattern).

[Modification 1]

In the embodiment described above, an example of the notice of the changed DTX pattern (the temporary DTX pattern) via the RRC message has been described, but other messages may also be used.

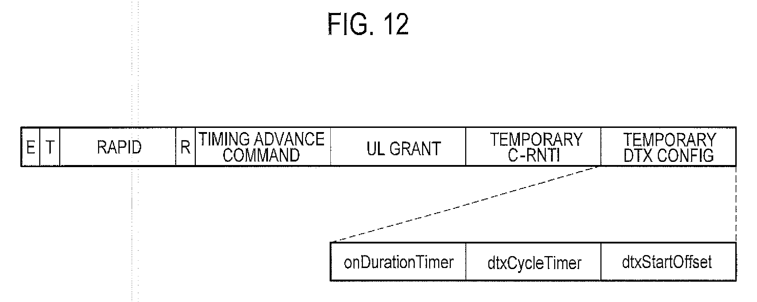

Fig. 12 is an example of a structure of a message when random access response (RAR) is used. The RAR is a response message responding to a random access preamble transmitted from the UE 100 in the initial connection.

As illustrated in Fig. 12, the RAR according to this modification includes the DTX pattern information (Temporary DTX config.). The DTX pattern information (Temporary DTX config.) includes information indicating the activation cycle (dtx Cycle), information indicating the uptime (on Duration), and an offset value (dtx StartOffset). However, all these parameters are not always necessary, and the uptime (on Duration) alone, for example, may be provided such that time between the transmission timing of the RAR and the uptime (on Duration) is valid (or there is transmission from the eNB 200).

[Modification 2]

In the embodiment described above, cancellation of the discontinuous transmission (DTX) has not specifically been mentioned. However, the eNB 200 may cancel the discontinuous transmission (DTX) based on the reception status of the request from the plurality of UEs 100 in the cell, and may start normal transmission. This is because, when a certain amount of communication is required, the cancellation of the discontinuous transmission (DTX) may be desired to improve the quality of service.

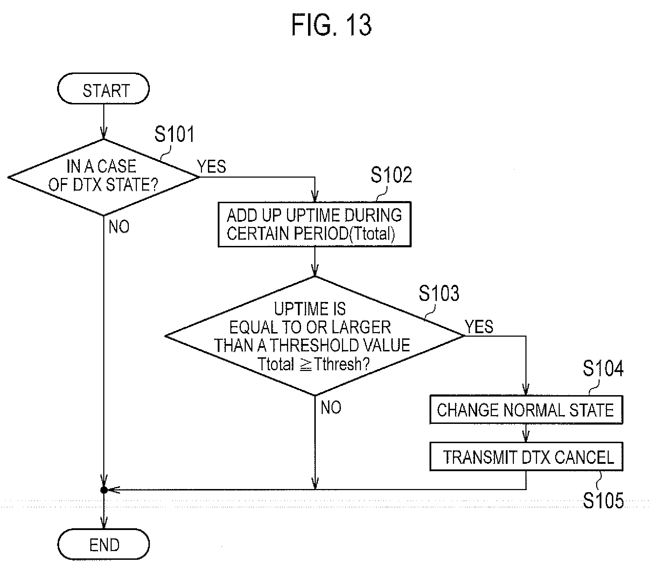

Fig. 13 is a flowchart of the operation of the eNB 200 according to this modification. As illustrated in Fig. 13, the eNB 200 adds up the uptime (on Duration) during a certain period (step S102) while the discontinuous transmission (DTX) is performed (step S101; Yes). If the total uptime is equal to or larger than a threshold value (step S103; Yes), the discontinuous transmission (DTX) is canceled and changed to the normal state (step S104), and the cancellation of the discontinuous transmission (DTX) is provided to the individual UEs 100 in an own cell (step S105).

[Other Embodiments]

In the embodiments described above, cooperation among the eNBs 200 has not specifically been mentioned. However, the eNB 200 may not only notify the UE 100 of the DTX pattern, but may also notify the neighboring eNB 200. Accordingly, the neighboring eNB 200 can perform mobility control of the UEs 100 that are under control of the neighboring eNB 200.

Further, in the embodiments, an example in which the present invention is applied to the LTE system has been mainly described; however, the present invention may also be applied to systems, other than the LTE system, as well as the LTE system.

In addition, the entire content of Japanese Patent Application No. 2013-080001 (filed on April 5, 2013) is incorporated in the present specification by reference.

**INDUSTRIAL APPLICABILITY**

As described above, the base station, the user terminal, and the communication control method according to the present invention are capable of suppressing deterioration in quality of service, while achieving power saving can be provided, and then it is useful in a mobile communication field.

**Claims**

1. Abase station configured to control a cell, comprising:

a transmitter configured to transmit a radio signal;
a controller configured to perform discontinuous transmission in which the transmitter is discontinuously activated; and
a receiver configured to receive a request for communication from a user terminal in the cell, wherein
the controller temporarily changes an activation pattern of the transmitter in response to the reception of the request for communication when performing the discontinuous transmission, and notifies the user terminal of pattern information indicating a changed activation pattern.

2. The base station according to claim 1, wherein
when the controller changes the activation pattern in response to the reception of the request for communication, the controller sets the changed activation pattern based on information regarding communication performed by the user terminal.

3. The base station according to claim 2, wherein
the information regarding communication is information indicating QoS required for the communication, or information indicating a data amount of the communication.

4. The base station according to claim 1, wherein
the controller notifies the user terminal of the pattern information by including the pattern information in an RRC message or a random access response.

5. The base station according to claim 1, wherein
the controller activates the transmitter at a first cycle during the discontinuous transmission, and
the controller changes the activation pattern into an activation pattern having a second cycle which is shorter than the first cycle, in response to the reception of the request for communication.

6. The base station according to claim 5, wherein
the pattern information includes at least one of information indicating the second cycle, information indicating an uptime during activation of the transmitter, and an offset value that specifies timing to start the transmitter.

7. The base station according to claim 1, wherein
the controller cancels the discontinuous transmission based on a reception status of the request for communication from a plurality of user terminals in the cell when performing the discontinuous transmission, and starts normal transmission.

8. A user terminal existing in a cell of a base station comprising a transmitter configured to transmit a radio signal, wherein
the base station performs discontinuous transmission in which the transmitter is discontinuously activated, and
the user terminal comprising:

a controller configured to transmit a request for communication to the base station so as to temporarily change an activation pattern of the transmitter; and
a receiver configured to perform reception from the base station based on pattern information indicating a changed activation pattern when the pattern information is provided from the base station.

**9.** The user terminal according to claim 7, wherein
the pattern information is included in an RRC message from the base station or a random access response.

**10.** A communication control method comprising:

a step of performing, by a base station comprising a transmitter configured to transmit a radio signal, discontinuous transmission in which the transmitter is discontinuously activated;
a step of receiving, by the base station, a request for communication from a user terminal in its own cell;
a step of temporarily changing an activation pattern of the transmitter in response to reception of the request for communication; and
a step of notifying, by the base station, the user terminal of pattern information indicating a changed activation pattern.

# FIG. 1

# FIG. 2

# FIG. 3

## FIG. 4

## FIG. 5

# FIG. 6

LCT

NCT

LEGACY PDCCH    CRS ePDCCH    PDSCH    NO TRANMISSION OF CRS

n [SUBFRAME]    n + 1    n + 5

EP 2 983 417 A1

# FIG. 7

## FIG. 8

ON DURATION

DTX CYCLE

UE100-1

UE100-2

UE100-3

⋮

UE100-n

## FIG. 9

ON DURATION
DTX CYCLE

UE100-1

UE100-2

UE100-3

⋮

UE100-n

## FIG. 10

| QCI | GUARANTEE | DELAY BUDGET [ms] | LOSS RATE | APPLICATION | TEMPORARY DTX OPERATION | |
|---|---|---|---|---|---|---|
| | | | | | OUTLINE | dtxCycle TIME [ms] |
| 1 | GBR | 100 | 1e-2 | VoIP | PERIODICALLY ACTIVATE IN RESPONSE TO ASSUMED DELAY | 200 |
| 2 | GBR | 150 | 1e-3 | VIDEO CALL | | 300 |
| 3 | GBR | 300 | 1e-6 | STREAMING | | 600 |
| 4 | GBR | 50 | 1e-3 | REAL-TIME GAME | ALWAYS ACTIVATE | - |
| 5 | Non- GBR | 100 | 1e-6 | IMS SIGNALING | PERIODICALLY ACTIVATE | 1000 |
| 6 | Non- GBR | 100 | 1e-3 | INTERACTIVE GAME | PERIODICALLY ACTIVATE | 500 |
| 7 | Non- GBR | 300 | 1e-6 | TCP PROTOCOL (BROWSING, E-MAIL, FILE DOWNLOADING) | TEMPORARILY ACTIVATE, AND END WHEN TRANSMISSION IS COMPLETED | - |
| 8 | Non- GBR | 300 | 1e-6 | | | - |
| 9 | Non- GBR | 300 | 1e-6 | | | - |

EP 2 983 417 A1

# FIG. 11

UE
100

eNB
200

MME/S-GW
300

SR → S11

START TIMER
T100 FOR UE100 ~S12

UL GRANT S13

BSR S14

UL GRANT S15

DATA S16 — DATA — S17

BEARER SETTING (QoS) S18

SET DTX
FOR UE100 ~S19

DTX SETTING INFORMATION S20

DATA (UE100 DATA) S22 — DATA (UE100 DATA) — S21

THERE IS DATA (PERIODICALLY)

DTX FOR UE100 (UPTIME IS ENDED)

DATA (UE100 DATA) S23

DTX FOR UE100 (UPTIME)

THERE IS DATA TO BE TRANSMITTED

DATA (UE100 DATA) S24

THERE IS NOT DATA
TO BE TRANSMITTED

END DTX
FOR UE100 ~S25

DTX SETTING END
INFORMATION S26

EP 2 983 417 A1

## FIG. 12

| E | T | RAPID | R | TIMING ADVANCE COMMAND | UL GRANT | TEMPORARY C-RNTI | TEMPORARY DTX CONFIG |
|---|---|-------|---|------------------------|----------|------------------|----------------------|

| onDurationTimer | dtxCycleTimer | dtxStartOffset |
|-----------------|---------------|----------------|

# FIG. 13

START

S101

IN A CASE
OF DTX STATE? — YES

NO

S102

ADD UP UPTIME DURING
CERTAIN PERIOD(Ttotal)

S103

UPTIME IS
EQUAL TO OR LARGER
THAN A THRESHOLD VALUE
$Ttotal \geqq Tthresh$? — YES

NO

S104

CHANGE NORMAL STATE

TRANSMIT DTX CANCEL

S105

END

## INTERNATIONAL SEARCH REPORT

| | International application No. |
|---|---|
| | PCT/JP2014/059831 |

**A. CLASSIFICATION OF SUBJECT MATTER**
*H04W52/02*(2009.01)i, *H04W88/08*(2009.01)i

According to International Patent Classification (IPC) or to both national classification and IPC

**B. FIELDS SEARCHED**

Minimum documentation searched (classification system followed by classification symbols)
H04W4/00-99/00, H04B7/24-7/26

Documentation searched other than minimum documentation to the extent that such documents are included in the fields searched
Jitsuyo Shinan Koho            1922-1996    Jitsuyo Shinan Toroku Koho    1996-2014
Kokai Jitsuyo Shinan Koho    1971-2014    Toroku Jitsuyo Shinan Koho    1994-2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2010-508704 A (Inter Digital Technology Corp.),<br>18 March 2010 (18.03.2010),<br>paragraphs [0012] to [0049], [0056]<br>& US 2008/0101268 A1      & WO 2008/057296 A1<br>& KR 10-2009-0084884 A    & CA 2671504 A<br>& CN 101611648 A          & AU 2007318106 A<br>& MX 2009004411 A         & RU 2009120054 A<br>& TW 200826699 A | 1-6,8-10<br>7 |
| X<br>Y | WO 2011/096860 A1 (TELEFONAKTIEBOLAGET L M ERICSSON (PUBL)),<br>11 August 2011 (11.08.2011),<br>claims; pages 5 to 10<br>& JP 2013-519291 A         & US 2012/0307700 A1<br>& EP 2532195 A | 1-6,8-10<br>7 |

| [×]  Further documents are listed in the continuation of Box C. | [ ]  See patent family annex. |
|---|---|

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 June, 2014 (19.06.14) | 01 July, 2014 (01.07.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/059831

C (Continuation).  DOCUMENTS CONSIDERED TO BE RELEVANT

| Category* | Citation of document, with indication, where appropriate, of the relevant passages | Relevant to claim No. |
|---|---|---|
| X<br>Y | JP 2010-521826 A  (Sharp Corp.),<br>24 June 2010 (24.06.2010),<br>paragraphs [0018] to [0038]<br>& US 2008/0225772 A1      & EP 2123081 A<br>& WO 2008/111683 A1      & CN 101632319 A | 1-6,8-10<br>7 |
| X<br>Y | JP 2011-250255 A  (NTT Docomo Inc.),<br>08 December 2011 (08.12.2011),<br>claims<br>(Family: none) | 1-6,8-10<br>7 |
| Y | JP 2010-521076 A  (NEC Corp.),<br>17 June 2010 (17.06.2010),<br>claims<br>& US 2010/0144299 A1      & GB 2447299 A<br>& EP 2119274 A          & WO 2008/111542 A1<br>& CN 101627654 A | 7 |

Form PCT/ISA/210 (continuation of second sheet) (July 2009)

| INTERNATIONAL SEARCH REPORT | International application No. |
|---|---|
| | PCT/JP2014/059831 |

Though in claim 7, it is written as "on the basis of reception state of a communication request from a user terminal, normal transmission is started by stopping the intermittent transmission", what is written in the description is to stop the intermittent transmission on the basis of a start-up time during a certain period of time, and the claim is not sufficiently supported in the meaning of PCT Article 6.

Consequently, the international search was conducted within a range that is supported and disclosed by the description, namely, the international search was conducted by considering the above-mentioned feature of claim 7 as stopping the intermittent transmission on the basis of a start-up time during a certain period of time.

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013080001 A